# EUROPÄISCHE PATENTSCHRIFT

(11) **EP 0 857 557 B1**
(45) Veröffentlichungstag und Bekanntmachung des Hinweises auf die Patenterteilung: **29.12.1999**
(21) Anmeldenummer: 98100934.3
(22) Anmeldetag: 21.01.1998
(51) Int. Cl.: B29C 45/14, A47G 29/00, A47G 29/10, A47G 25/06

(54) **Hakenleiste**
Holder with hooks
Support à crochets

(30) Priorität: 05.02.1997 DE 19704239
(43) Veröffentlichungstag der Anmeldung: 12.08.1998
(73) Patentinhaber: Erwin Paulat Kunststoff- und Metallwaren GmbH, 76770 Hatzenbühl (DE)
(72) Erfinder: Paulat, Thomas, 76770 Hatzenbühl (DE)
(74) Vertreter: Petersen, Frank, Dipl.-Ing.

(56) Entgegenhaltungen:
- EP-A- 0 221 851
- FR-A- 2 731 893
- GB-A- 2 058 550
- JP-A- 7 156 194
- JP-A- 8 274 431
- US-A- 4 326 761

## Beschreibung

Die Erfindung betrifft eine Hakenleiste nach Anspruch 1, insbesondere zum Anhängen von Schlüsseln, mit einem Grundkörper, der eine Mehrzahl von Haken trägt, sowie eine Vorrichtung nach Anspruch 7 und ein Verfahren nach Anspruch 10 zum Herstellen einer solchen Hakenleiste.

Es sind Hakenleisten verschiedener Arten bekannt: Zum einen gibt es aus Blech ausgestanzte Leisten, bei denen die Haken herausgebogen werden. Die Bearbeitung solcher Leisten erfolgt in mehreren Schritten und der Herstellungsprozeß, bei dem das Werkstück entgratet, entfettet, phosphatiert und anschließend entweder galvanisiert oder pulverbeschichtet wird, ist sehr aufwendig. Ist bei derartigen Hakenleisten beabsichtigt, eine Beschriftung der Haken zu ermöglichen, so müssen separate Befestigungshinterschneidungen an der Leiste ausgeformt werden, in die dann entsprechende Papier- und Folienstreifen eingesteckt werden können.

Desweiteren sind Metallschienen bekannt, bei denen aus Kunststoff gespritzte Haken von oben aufgeschoben werden. Auch dies ist sehr aufwendig, da einerseits die Metallschiene herzustellen und nachzubearbeiten ist und andererseits die Montage des Kunststoffhakens vorgenommen werden muß. Eine Beschriftungsmöglichkeit der Haken ist bei dieser vorbekannten Ausführungsform über eine entsprechende Beschriftungsnut am Haken gelöst.

Weiterhin sind noch Hakenleisten bekannt, zum Beispiel aus GB-A-2,058,550, die entweder aus Kunststoff oder Metall bestehen und die in Trageschienen eingesetzt, eingeschnappt oder auf ähnliche Weise befestigt werden, die aber alle einen hohen Montageaufwand haben.

Dies ist auch der Nachteil von vorbekannten profilierten Metall- oder extrudierten Kunststoffleisten, bei denen entsprechende Haken seitlich eingeschoben werden. Diese Bestückung der Leisten mit den seitlich einzuschiebenden Haken ist entsprechend arbeitsaufwendig.

Dann gibt es noch spritzgegossene Hakenleisten, die aber den Nachteil von sehr teuren Werkzeugen haben. Für jede unterschiedliche Leistenlänge ist ein separates Spritzwerkzeug notwendig und außerdem sind für entsprechende Hinterschneidungen an den Haken oder an Beschriftungsnuten aufwendige und teure Kernzugwerkzeuge erforderlich.

Aufgabe der vorliegenden Erfindung ist es daher, eine Hakenleiste anzugeben, die mit möglichst geringem technischen Aufwand und vor allen Dingen geringstmöglichen Lohnarbeitskosten aufgrund von Montage oder Nacharbeit herzustellen ist. Zusätzlich sollen die Hakenleisten in beliebigen Längen hergestellt werden können, ohne daß Veränderungen an der Geometrie der Leiste notwendig sind.

Diese Aufgabe wird erfindungsgemäß gelöst, indem der Grundkörper der Hakenleiste ein extrudiertes Profil aus Kunststoff ist, das mit einer Mehrzahl von Lochungen versehen ist, in die die Haken aus Kunststoff formschlüssig eingespritzt sind.

Der Vorteil der Erfindung liegt darin, daß eine Hakenleiste gemäß der Erfindung rein maschinell herstellbar ist, ohne daß eine zusätzliche manuelle Bearbeitung notwendig wäre. Damit ist die Herstellung einer erfindungsgemäßen Hakenleiste sehr effizient und kann somit sehr kostengünstig durchgeführt werden.

Indem die eingespritzten Haken die Lochungen in dem extrudierten Profil mit einstückig angeformten Aufweitungen umgreifen wird ein besonders sicherer Halt des Hakens an dem Grundkörper gewährleistet.

Vorteilhafterweise weist das extrudierte Profil an seiner den Haken abgewandten Rückseite eine Aufnahme auf, in der Zusatzelemente aufgenommen werden können. Dadurch wird die Verwendbarkeit der Hakenleiste stark erhöht. Bei dieser Aufnahme handelt es sich vorzugsweise um eine T-Nut, wobei hierunter im Sinne der Erfindung auch beispielsweise eine Schwalbenschwanznut zu verstehen ist.

Bei den erwähnten Zusatzelementen kann es sich beispielsweise um eine Metallschiene handeln. Ein einfacher, unbehandelter Metallstreifen steift damit die Hakenleiste auf einfache Weise gegen Biegung und Torsion aus.

Bei den Zusatzelementen, die in die Aufnahme auf der Rückseite des Profils eingeführt werden können, kann es sich aber auch um Befestigungskörper handeln. Über derartige, vorteilhafterweise aus Kunststoff bestehende nutensteinähnliche Befestigungskörper wird ermöglicht, eine Verbindung der Hakenleiste mit Rastleisten zu ermöglichen, wie sie in bekannten Schlüsselschränken an deren Vorder- oder Rückwand vorhanden sind. Die Ankopplung der Hakenleiste über die üblicherweise im Sprizgußverfahren hergestellten, wie Nutensteine fungierenden Befestigungskörper erfolgt dabei vorzugsweise über am Befestigungskörper ausgebildete Schnapphaken, Einhängeösen, Einhängehinterschneidungen oder Eindrücknoppen. Diese greifen in entsprechende Lochungen der Rastleisten ein. Alternativ sind sie aber auch in Lochungen, Ausklinkungen, Aussparungen etc. anzubringen, die ggf. direkt in den Vorder- oder Rückwänden von Schlüsselschränken ausgebildet sind.

Vorteilhaft dabei ist, daß es unterschiedliche Befestigungskörper gibt, so daß die erfindungsgemäße Hakenleiste an unterschiedlichste Schlüsselschranksysteme anpaßbar ist. Die Hakenleiste selbst wird dabei nicht geändert. Die Herstellung der Befestigungskörper ist dabei über einfache Spritzgußwerkzeuge kostengünstig über Formeinsätze zu realisieren.

Als zusätzliche Option ergibt sich, daß über die Befestigungskörper die Hakenleiste direkt an einer Wand zu befestigen ist, entweder über Schrauben oder über eine Klebeverbindung. Bei der Verschraubung werden die Befestigungskörper als Wandhalter an eine Wand geschraubt und die Leiste dann seitlich eingeschoben. Bei der Klebebefestigung wird vorteilhafterweise ein abgelängtes Profil in die als Aufnahme fungierende T-Nut der Hakenleiste eingeschoben und diese danach mit einem Klebestreifen an eine glatte Wand geklebt.

Grundsätzlich kann die rückseitige Aufnahme der Hakenleiste auch aus mehreren parallelen Nuten bestehen, in die die Befestigungskörper dann entsprechend eingeklippst werden.

In bezug auf die Herstellung der Hakenleiste stellte sich wie oben bereits ausgeführt die Aufgabe, sie mit einem geringen Aufwand an manuellen Tätigkeiten für Montage und Nacharbeit herzustellen. Hierzu wird eine Vorrichtung zum Herstellen einer entsprechenden Hakenleiste vorgeschlagen mit einer Zuführung für den extrudierten, schienenförmigen Grundkörper, einem Stanzwerkzeug zum Einbringen von Lochungen in den Grundkörper und einem Spritzgußwerkzeug mit Kavitäten zum Anformen von Haken an den Grundkörper an den durch die Lochungen vorgegebenen Stellen. Hier wird insbesondere vorgeschlagen, das Stanzwerkzeug und das Spritzgußwerkzeug auf einer gemeinsamen Grundplatte zu montieren, so daß zur Herstellung der Hakenleiste vorteilhafterweise nur ein derartiges Verbundwerkzeug benötigt wird. Außerdem hat eine derartige gemeinsame Grundplatte den Vorteil, daß die Werkzeuge gemeinsam aus einer Maschine zu entnehmen sind, so daß diese ohne größere Umrüstarbeiten auch für andere Aufgaben eingesetzt werden kann, bei denen z.B. keine Stanzarbeiten anfallen.

Wenn dabei zwischen einzelnen Lochstanzmessern des Stanzwerkzeuges und/oder einzelnen Kavitäten des Spritzgußwerkzeuges jeweils der gleiche Abstand vorgesehen ist, lassen sich Hakenleisten beliebiger Länge herstellen, wobei der Grundkörper in Form des extrudierten Profils in gleichmäßigen Schritten durch das Folgewerkzeug getaktet wird. Dabei wird an den Stellen, an denen in einem ersten Arbeitstakt mit dem Stanzwerkzeug Lochungen angebracht werden, im zweiten Arbeitstakt im Spritzgußwerkzeug die entsprechenden Haken angeformt. Vorteilhafterweise kann dem Spritzwerkzeug dann noch eine Ablängsäge nachgeordnet sein, mit der bei einer kontinuierlichen Fertigung von Hakenleisten diese in gewünschter Länge vom Grundkörper abzutrennen ist. Vorteilhafterweise kann die Ablängsäge dabei von der Grundplatte mitgetragen sein.

Mit einer derartigen Vorrichtung zum Herstellen einer Hakenleiste ist das erfindungsgemäße Herstellungsverfahren möglich: Bei diesem Verfahren zum Herstellen einer Hakenleiste wird ein aus Kunststoff extrudiertes Profil abgelängt und in einem Magazin zwischengespeichert. Von dort wird es einem Stanzwerkzeug zugeführt, mit dem in einem ersten Arbeitsgang Lochungen in das Profil eingebracht werden Das Profil wird dann in ein Spritzwerkzeug weitergetaktet, in dem die Lochungen im Bereich von Kavitäten zu liegen kommen, so daß in einem weiteren Arbeitsgang, in dem sich das Spritzwerkzeug schließt, hier Haken angespritzt werden. Dabei wird das Einbringen von Löchern und das Anspritzen von Haken wiederholt für jeweils einen Teil der zu fertigenden Haken einer Hakenleiste.

Vorteilhafterweise kann bei diesem Verfahren an die Haken direkt eine Aufnahmetasche für Papier- und/oder Folienschilder mit angespritzt werden. Wesentlich ist aber, daß es bei einem derartigen Verfahren möglich ist, in einer Spritzgußmaschine mit entsprechendem Folgewerkzeug aus Stanz- und Einspritzwerkzeug beliebige Leistenlängen zu erzeugen, ohne daß an diesem Werkzeug Veränderungen vorgenommen werden müßten. Eine optimale Auslastung erhält man, wenn bei einer gleichen Anzahl von Stanzmessern im Stanzwerkzeugen wie Kavitäten im Spritzwerkzeug die Anzahl der Haken eine Mehrzahl dieser erstgenannten Anzahl entspricht.

Es liegt aber auch im Rahmen der Erfindung, die Hakenleiste quasi endlos herzustellen und dann mit einem Abtrennwerkzeug eine Hakenleiste mit einer gewünschten Anzahl von Haken bzw. von einer gewünschten Länge von dieser endlosen Leiste abzutrennen.

Weitere Vorteile und Merkmale der Erfindung ergeben sich aus der nachfolgenden Beschreibung von Ausführungsbeispielen. Dabei zeigt
- Figur 1: einen Schnitt durch eine erfindungsgemäße Hakenleiste entlang der Schnittlinie I-I in Figur 2;
- Figur 2: die Vorderansicht einer erfindungsgemäßen Hakenleiste befestigt an zwei Rastleisten;
- Figur 3: eine Aufsicht auf die Befestigung einer Hakenleiste an einer Rastleiste gemäß Figur 2;
- Figur 4: einen Schnitt entlang der Befestigung einer Hakenleiste an einer Rastleiste gemäß der Linie IV-IV in Figur 2;
- Figur 5: die Vorderansicht einer Hakenleiste mit einer anderen Befestigungsweise;
- Figuren 6 bis 8: Ansichten verschiedener Zubehörteile für eine Hakenleiste;
- Figur 9: Prinzipskizze der schrittweisen Herstellung einer erfindungsgemäßen Hakenleiste;
- Figur 10: Prinzipskizze einer Vorrichtung zur Herstellung einer erfindungsgemäßen Hakenleiste.

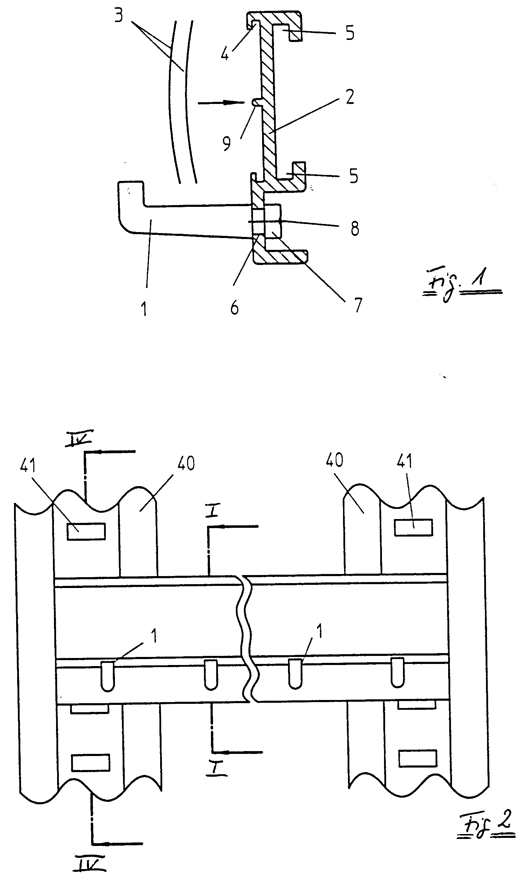

In Figur 1 ist eine erfindungsgemäße Hakenleiste im Querschnitt dargestellt. An einem Grundkörper in Form eines im Strangpreßverfahren hergestellten Profils 2 ist eine Lochung 6 vorgesehen, in die ein Haken 1 direkt angespritzt ist. Dabei ist der Haken durch die Lochung 6 hindurchgespritzt und weist auf der anderen Seite des Profils 2 eine Aufweitung 7 auf, so daß der Haken 1 formschlüssig mit dem Profil 2 verbunden ist. Die Herstellung des Hakens 1 erfolgt wie weiter unten noch beschrieben wird derart, daß sein Anspritzpunkt 8 in einem bei der späteren Benutzung der Hakenleiste nicht sichtbaren Bereich liegt.

Die hier im Schnitt dargestellte Hakenleiste weist an ihrem Profil 2 oberhalb des Hakens 1 eine Papier-/Foliennut 4 auf, in der ein Papierstreifen mit einem diesen abdeckenden Folienstreifen 3 einzuklemmen ist, so daß eine einfache Möglichkeit vorhanden ist, die Haken 1 zu beschriften.

Damit der Papier- oder Folienstreifen 3 einfach zu entfernen ist, ist die Papier- bzw. Foliennut 4 mittig mit einem Abstandssteg 9 versehen, mit dem eine spätere Entnahme des Papier- oder Folienstreifens 3 erleichtert wird.

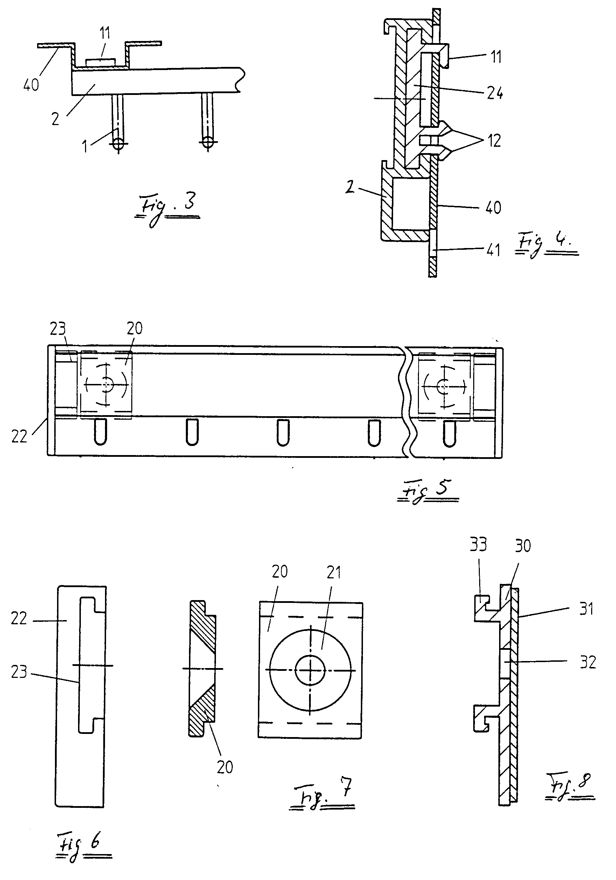

An der dem Haken 1 abgewandten Rückseite des Profils weist dieses weiterhin eine T-Nut 5 auf. Über eine derartige T-Nut 5 ist die Hakenleiste an Rastleisten 40 zu befestigen, wie dies in Figur 2 dargestellt ist.

Rastleisten 40 sind in Schlüsselschränken verschiedenster Hersteller in unterschiedlichen Ausführungsformen vorhanden. Die hier dargestellte Form der Rastleisten weist in regelmäßigen Abständen Ausstanzungen 41 auf. In diesen Ausstanzungen 41 werden die Hakenleisten mit Einhängelaschen 11 eingehakt, die an entsprechenden Befestigungskörpern 24 ausgebildet werden, die in die T-Nut 5 des Profils 2 einzuschieben sind.

Nachdem die Hakenleiste über eine derartige Einhängelasche in einer Ausstanzung 41 der Rastleiste 40 eingehängt ist, wird sie nach unten gezogen und ein ebenfalls am Befestigungskörper 24 ausgebildeter Schnapphaken 12 wird in eine weitere Ausstanzung 41 gedrückt, womit die Hakenleiste an der Rastleiste 40 fixiert ist. Je nach Ausführungsform der Rastleiste 40 mit ihren Ausstanzungen 41 sind auch die Befestigungskörper 24 entsprechend angepaßt.

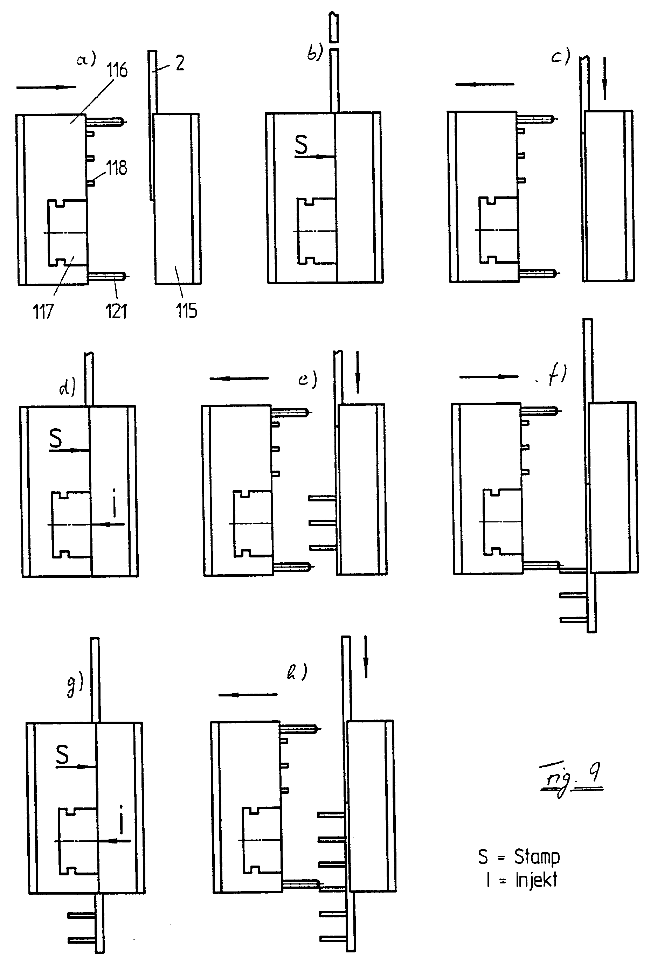

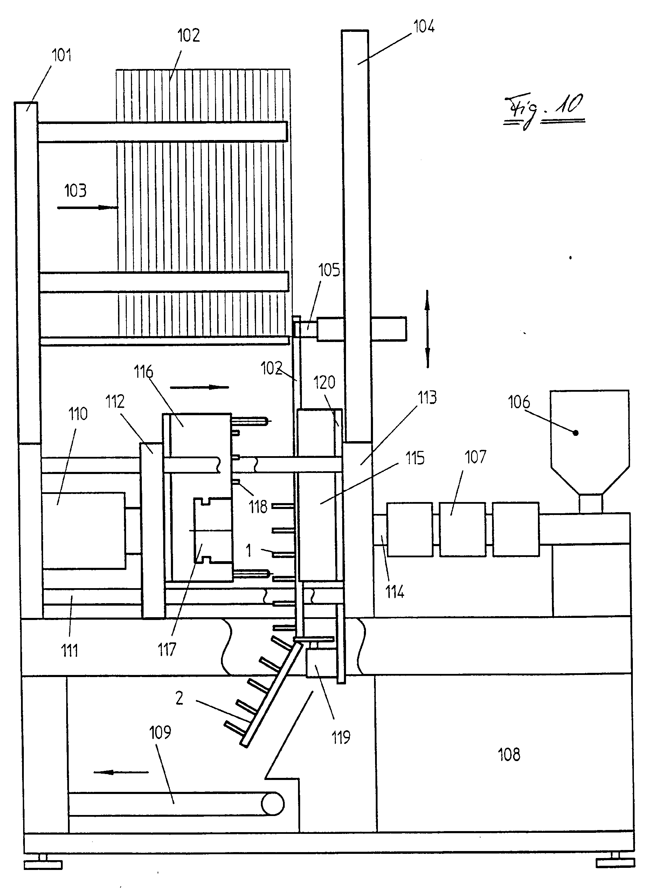

In der Figur 5 ist eine andere Weise der Befestigung einer entsprechenden Hakenleiste dargestellt. In diesem Ausführungsbeispiel sind in die T-Nut 5 als Zusatzelemente Befestigungskörper in Form von Wandbefestigungen 20 eingeschoben. Diese Wandbefestigungen sind in der Figur 7 genauer dargestellt. Sie weisen an ihrer Vorderseite noch eine Verschraubungssenkung 21 auf, so daß hier eine Senkschraube an ihrer Vorderseite bündig einzuschrauben ist. Auf zwei entsprechende Wandbefestigungen 20 wird dann eine Hakenleiste mit ihrer T-Nut 5 aufgeschoben, so daß die Hakenleiste auf diese Weise an einer Wand mit Schrauben zu befestigen ist. Die Endflächen der Hakenleiste werden abschließend noch mit Endkappen 22 versehen, wie sie auch in der Figur 6 dargestellt sind. Diese Endkappen tragen eine Einschiebekontur 23, die in ihrer Form auf die T-Nut 5 abgestimmt ist und somit von dieser gehalten wird.

In der Figur 8 wird eine weitere Möglichkeit der Befestigung dargestellt: Hier ist eine Klebebefestigung 30 mit entsprechenden Hakenstegen 33 ausgerüstet, die in die T-Nut 5 eingreifen. An der der Hakenleiste abgewandten Seite trägt die Klebebefestigung 30 einen Klebestreifen 31, mit dem eine Hakenleiste an eine glatte Fläche zu kleben ist, nachdem die Klebebefestigung wie oben erwähnt in die T-Nut 5 eingesetzt ist. Gegebenenfalls kann auch eine derartige Klebebefestigung 30 durch ein Befestigungsstanzloch 32 mit einer Schraube fixiert werden.

Die beschriebenen Zusatzelemente, wie die Wandbefestigung 20, der Befestigungskörper 24 oder die Klebebefestigung 30 werden als nutensteinähnliche Befestigungskörper vorzugsweise aus Kunststoff im Spritzgußverfahren hergestellt.

Durch eine entsprechende Wahl des Befestigungskörpers können die Hakenleisten auf verschiedenste Schlüsselschranksysteme oder andere Anwendungsfälle abgestimmt werden. Hierzu ist lediglich ein Austausch des entsprechenden Befestigungskörpers notwendig, ohne daß die erfindungsgemäße Schlüsselleiste hierfür zu ändern ist. Bei längeren freien Überbrückungslängen für eine Hakenleiste kann in die T-Nut 5 auch eine Leiste aus einem Metallstreifen eingeschoben werden, wodurch die Leiste gegen Biegung und Torsion ausgesteift wird. Dieser Metallstreifen kann billig aus unbehandeltem Metall sein, da er nicht zu sehen ist.

Die in den Zeichnungen dargestellte Geometrie der Haken bzw. der Hakenleiste ist nur beispielhaft zu sehen. Grundsätzlich kann zum Beispiel die Papiernut über oder unter dem Haken angebracht sein und der Querschnitt des Profils kann eine nahezu beliebige Geometrie aufweisen, wobei die Befestigungskörper gegebenenfalls die Hakenleiste auch von außen ganz oder teilweise umgreifen können.

Anhand der Figur 9 wird noch die Herstellung der Hakenleiste beschrieben.

In der ersten Phase wird das Profil 2 in ein Folgewerkzeug eingeführt, das aus zwei aufeinander zu beweglichen Teilen besteht, nämlich aus einer Düsenseite 115 und einer Auswerferseite 116. In dieser ersten Position wird das Profil 2 durch Zusammenführen der beiden Seiten 115 und 116 des Werkzeuges durch Stanzdorne 118 mit entsprechenden Lochungen 6 versehen, wie sie oben erwähnt wurden. Dies ist in der Figur 9b durch 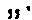 s" für 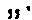 stamp" = 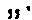 stanzen" gekennzeichnet.

Die beiden Werkzeugseiten werden dann wieder auseinandergezogen, wie in der Figur 9c dargestellt, und das Profil 2 wird in eine benachbarte Position weitergeschoben, bei der die soeben mit den Stanzdornen 118 ausgestanzten Lochungen 6 im Bereich eines Spritzgußabschnittes des Folgewerkzeuges zu liegen kommen. Dabei liegen diese Lochungen 6 im Bereich von entsprechenden Formnester und bei erneutem Schließen des Folgewerkzeuges, wie in der Figur 9d dargestellt, werden hier dann Haken angespritzt, was durch das Symbol 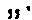 I" für 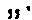 inject" = 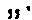 spritzen" verdeutlicht wird. Dabei werden in dem Schieber 117 eine Mehrzahl von Haken 1 ausgeformt, die jeweils formschlüssig mit den Lochungen 6 verbunden sind.

Gleichzeitig mit dem Spritzgießen der Haken 1 in den bisher erwähnten Lochungen 6 werden an des Profils 2 durch die Stanzdorne 118 weitere Lochungen 6 in dem jetzt im Stanzbereich liegenden Abschnitt des Profils 2 ausgestanzt. Nach dem in Figur 9e dargestellten Trennen der beiden Werkzeugseiten kann dann das Profil 2 durch das Folgewerkzeug weiter hindurchgeschoben werden, so daß dann die soeben erst eingeformten Lochungen 6 in den Bereich des Spritzgußwerkzeuges und seiner Kavitäten zu liegen kommen. Durch erneutes Schließen des Folgewerkzeuges, wie in Figur 9f dargestellt, können dann wie in Figur 9g weitere Haken 1 angeformt werden, wobei gleichzeitig bei einem nachgeschobenen Profil 2 bereits die nächsten Lochungen 6 mittels der Stanzdorne 118 eingeformt werden.

Nachdem die beiden Werkzeugseiten wieder voneinander getrennt sind, ist die erste Hakenleiste fertig mit im hier dargestellten Beispiel sechs Haken und kann aus dem Werkzeug entnommen werden. Gleichzeitig wird dabei das zweite Profil 2 in die in Figur 9c dargestellte Position des ersten Profils verschoben, in der wie dann bei der in Figur 9d dargestellten Stellung auch an dem zweiten Profil Haken angeformt werden. Auf diese Art und Weise ist ein kontinuierlicher Herstellungsprozeß realisiert.

Damit die beiden Werkzeugseiten sauber gegeneinander geführt sind, sind sie mit entsprechenden Führungsbolzen 121 und nicht dargestellten korrespondierenden Buchsen ausgerüstet.

Die auf diese Weise hergestellten Hakenleisten haben eine Vielzahl von Vorteilen. Zum einen kann ein optisch ansprechendes Design erfolgen, in dem zum Beispiel farbige Haken angespritzt werden. Diese Haken können dabei beispielsweise auch auf die Farbe von Schlüsselanhängern etc. abgestimmt sein.

Außerdem sind entsprechende Leisten recyclingfähig, wenn die angespritzten Haken und Profile aus dem gleichen Grundmaterial bestehen.

Selbstverständlich besteht auch die Möglichkeit, die Haken beim Anspritzen direkt mit entsprechenden Aufnahmetaschen für Papier und Folie am oder neben dem Haken zu versehen.

Bei dem beschriebenen Stanzvorgang handelt es sich um eine Prinzipdarstellung. Es gibt auch mehrere Möglichkeiten um den Stanzvorgang in der Spritzgußmaschine zu betreiben:

Zum einen direkt beim Werkzeugschließen. Da die Stanzkräfte relativ gering sind, kann das Stanzen auch außerhalb des Mittelpunktes der Schließeinheit erfolgen. Nachteilig ist dabei allerdings, daß eine höhere Werkzeugsicherungskraft einzustellen ist. Dieser einfachste Fall ist oben beschrieben.

Alternativ ist möglich, einen extra von der Maschine gesteuerten Hydraulikzylinder in der beweglichen Platte der Form vorzusehen, der nach dem Anliegen der Werkzeugschließkraft, also bei geschlossenem Werkzeug, erst den Stanzvorgang einleitet. Dies entspricht dem hier nicht näher beschriebenen hydraulischen Auswerfer bei der Spritzgußmaschine.

Als weitere Möglichkeit kann nur auf der düsenseitigen Aufspannplatte der Spritzgußmaschine eine hydraulisch oder pneumatisch betätigte Stanzeinheit vorgesehen werden, die dann das Profil umgreift, wodurch man von der Schließkraft unabhängig ist.

In der Figur 10 ist eine vollständige Anlage zur Herstellung einer entsprechenden Hakenleiste schematisch dargestellt: Diese Vorrichtung weist ein Leistenmagazin 101 auf, in dem Rohleisten 102 gelagert sind. Diese Rohleisten sind stranggepreßt in der Form des Profils 2.

Die Rohleisten 102 werden entsprechend dem Vorschub 103 in dem Leistenmagazin 101 zu einer Entnahmestelle gefördert, wo sie aus dem Leistenmagazin durch eine Greifzange 105 entnommen werden, die entlang einer NC-Achse 104 verfahrbar ist. Entsprechend dem anhand der Figur 9 beschriebenen Verfahren werden die Rohleisten dabei mit Lochungen 6 versehen und anschließend mit Haken 1, die in diese Lochungen 6 formschlüssig eingespritzt werden.

Dieses Einspritzen erfolgt über eine der Vorrichtung zugeordnete Spritzgießmaschine. Bei dieser wird aus einem Trichter 106 entsprechender Kunststoff entnommen und in einer Heizung 107 erwärmt, um dann bei der Einspritzung durch einen Spritzzylinder 114 in die Düsenseite 115 des Folgewerkzeuges eingespritzt zu werden. Dabei ist in diese Düsenseite 115 ein nicht dargestellter Heißkanalverteiler integriert, der den Kavitäten flüssige Kunststoffmasse zuführt und in Heißkanaldüsen endet. Dadurch wird ein Spritzen der Haken ohne Anguß ermöglicht.

Der Düsenseite 115 liegt der Auswerferseite 116 gegenüber, wobei über den Schieber 117 die Form der Haken 1 zu bestimmen ist. Die Auswerferseite 116 ist dabei auf einer beweglichen Aufspannplatte befestigt, die entlang von Holmen 111 durch die Schließhydraulik 110 hin und her bewegt wird. Dementgegen ist die Düsenseite 115 auf einer festen Aufspannplatte 113 starr befestigt.

Im hier dargestellten Beispiel ist auf dieser festen Aufspannplatte noch eine Trennsäge 119 befestigt, mit der Hakenleisten unterschiedlicher Länge je nach Bedarf hergestellt werden können. Die mit der Trennsäge 119 abgetrennten Abschnitte fallen dabei auf ein Förderband 109 und werden aus der Vorrichtung zur Verpackung etc. transportiert.

Die an fallenden Lohnkosten bei der hier beschriebenen Herstellung sind ausgesprochen gering, da die Produktion bis auf wenige Handgriffe vollautomatisch erfolgen kann.

Die beschriebene Vorrichtung ist dabei unter anderem auch deswegen sehr flexibel, da sie wie bei modernen Maschinen üblich, mit einer Handling-Schnittstelle und einer blockprogrammierbaren Steuerung versehen ist.

Grundsätzlich sind bei diesem Verfahren die unterschiedlichsten Hakenformen herstellbar, die neben dem Aufhängen von Schlüsselanhängern mit Aufhängeloch, Papier und Folie auch zum Aufhängen von Handtüchern, Abwaschbürsten oder ähnlichen Artikeln mit Aufhängeöse verwandt werden können. Auch die Dimensionen der Leiste sind variierbar, so daß zum Beispiel Leisten für Hotel-Schlüsselanhänger mit größeren Abmessungen gefertigt werden können.

## Patentansprüche

1. Hakenleiste, insbesondere zum Anhängen von Schlüsseln, mit einem Grundkörper, der eine Mehrzahl von Haken trägt,
dadurch gekennzeichnet,
daß der Grundkörper ein extrudiertes Profil (2) aus Kunststoff ist, das mit einer Mehrzahl von Lochungen (6) versehen ist, in die die Haken (1) aus Kunststoff formschlüssig angespritzt sind.

2. Hakenleiste gemäß Anspruch 1,
dadurch gekennzeichnet,
daß die angespritzten Haken (1) die Lochungen (6) in dem extrudierten Profil (2) mit einstückig angeformten Aufweitungen (7) umgreifen.

3. Hakenleiste gemäß Anspruch 1,
dadurch gekennzeichnet,
daß das extrudierte Profil (2) an seiner dem Haken abgewandten Rückseite eine Aufnahme für Zusatzelemente aufweist.

4. Hakenleiste gemäß Anspruch 3,
dadurch gekennzeichnet,
daß die Aufnahme eine T-Nut (5) ist.

5. Hakenleiste gemäß Anspruch 3,
dadurch gekennzeichnet, daß das Zusatzelement eine Metallschiene ist.

6. Hakenleiste gemäß Anspruch 3,
dadurch gekennzeichnet,
daß das Zusatzelement ein Befestigungskörper (24, 20, 30) ist.

7. Vorrichtung zum Herstellen einer Hakenleiste nach Anspruch 1
mit einer Zuführung für einen extrudierten Grundkörper (2), einem Stanzwerkzeug zum Einbringen von Lochungen in den Grundkörper und
einem Spritzgußwerkzeug mit Kavitäten zum Anformen von Haken (1) an den Grundkörper (2),
wobei das Stanzwerkzeug und das Spritzgußwerkzeug von einer gemeinsamen Grundplatte (120) getragen sind.

8. Vorrichtung gemäß Anspruch 7,
dadurch gekennzeichnet,
daß dem Spritzwerkzeug eine Ablängsäge (119) nachgeordnet ist.

9. Vorrichtung gemäß Anspruch 8,
dadurch gekennzeichnet,
daß die Ablängsäge (119) von der Grundplatte (120) getragen ist.

10. Verfahren zum Herstellen einer Hakenleiste nach Anspruch 1,
bei dem ein aus Kunststoff extrudiertes Profil (2) abgelängt und in einem Magazin zwischengespeichert wird, von dort einem Stanzwerkzeug zugeführt wird, mit dem in einem Arbeitsgang Lochungen (6) in das Profil eingebracht werden, das Profil (2) dann in ein Spritzwerkzeug weitergetaktet wird, in dem die Lochungen (6) im Bereich von Kavitäten zu liegen kommen, und in einem weiteren Arbeitsgang hier Haken (1) angespritzt werden, wobei das Einbringen von Lochungen und das Anspritzen von Haken wiederholt erfolgt für jeweils einen Abschnitt der zu fertigenden Hakenleiste.

11. Verfahren gemäß Anspruch 10,
dadurch gekennzeichnet,
daß Aufnahmetaschen für Papier und/oder Folie an oder neben den Haken mit angespritzt werden.

## Claims

1. A holder bar with hooks, particularly for hanging keys, having a base body carrying a plurality of hooks, characterised in that the base body is a plastics extruded section (2) provided with a plurality of holes (6) into which the hooks (1) made of plastics are injected so as to form a keyed joint.

2. A holder bar with hooks according to claim 1, characterised in that the injected hooks (1) engage around the holes (6) in the extruded section (2) with integral moulded-on widened parts (7).

3. A holder bar with hooks according to claim 1, characterized in that on its rear side remote from the hooks the extruded section (2) has a socket for additional elements.

4. A holder bar with hooks according to claim 3, characterised in that the socket is a T-shaped groove (5).

5. A holder bar with books according to claim 3, characterised in that the additional element is a metallic rail.

6. A holder bar with hooks according to claim 3, characterised in that the additional element is a fixing body (24, 20, 30).

7. Apparatus for making a holder bar with hooks according to claim 1, with a supply means for a extruded base body (2), a stamping tool for making holes in the base body, and an injection-moulding tool with cavities for moulding hooks (1) on the base body (2), wherein the stamping tool and the injection-moulding tool are carried on a common base plate (120).

8. Apparatus according to claim 7, characterised in that the injection-moulding tool is connected downstream of a bucking saw (119).

9. Apparatus according to claim 8, characterized in that the bucking saw (119) is carried by the base plate (120).

10. A process for producing a holder bar with hooks according to claim 1, wherein a section (2) extruded from plastics is cut to length and temporarily stored in a magazine, fed from there to a stamping tool by means of which holes (6) are formed in the section in a single operation, the section (2) is then periodically further conveyed into a injection-moulding tool wherein the holes (6) come to lie in the vicinity of cavities, and in a further operation hooks (1) are injected here, wherein the application of holes and the injection of the hooks takes place repeatedly for each respective section of the holder bar with hooks that is to be fabricated.

11. A process according to claim 10 characterised in that receptor pockets for paper and/or foil are injected at or adjacent the hooks and with them.

## Revendications

1. Support à crochets, en particulier pour suspendre des clés, comportant un corps de base qui porte une pluralité de crochets, caractérisé en ce que le corps de base est un profilé extrudé en plastique (2) doté d'une pluralité de perforations (6) dans lesquelles les crochets en plastique (1) sont coulés par injection de façon à former un engagement positif.

2. Support à crochets selon la revendication 1, caractérisé en ce que les crochets coulés par injection (1) enveloppent les perforations (6) dans le profilé extrudé (2) avec des évasements formés d'un seul tenant (7).

3. Support à crochets selon la revendication 1, caractérisé en ce que le profilé extrudé (2) présente un logement pour des éléments auxiliaires sur sa face arrière opposée au crochet.

4. Support à crochets selon la revendication 3 caractérisé en ce que le logement est une rainure en T (5).

5. Support à crochets selon la revendication 3, caractérisé en ce que l'élément auxiliaire est un rail de métal.

6. Support à crochets selon la revendication 3, caractérisé en ce que l'élément auxiliaire est un élément de fixation (24, 20, 30).

7. Dispositif de fabrication d'un support à crochets selon la revendication 1, comportant une alimentation amenant un corps de base extrudé (2) à un outil pour estampage pour la réalisation de perforations dans le corps de base et à un moule pour injection présentant des cavités pour le façonnage de crochets (1) sur le corps de base (2), l'outil pour estampage et le moule pour injection étant supportés par une plaque de base commune (120).

8. Dispositif selon la revendication 7, caractérisé en ce qu'une scie circulaire (119) est raccordée à la suite du moule pour injection.

9. Dispositif selon la revendication 8, caractérisé en ce que la scie circulaire (119) est supportée par la plaque de base (120).

10. Procédé de fabrication d'un support à crochets selon la revendication 1, dans lequel un profilé extrudé en plastique (2) est mis en longueur et stocké de façon temporaire dans un chargeur d'où il est amené à un outil pour estampage avec lequel il est réalisé, en une opération, des perforations (6) dans le profilé, le profilé (2) étant ensuite transporté plus avant de façon cadencée à un moule pour injection dans lequel les perforations (6) viennent se placer dans la zone des cavités et les crochets (1) étant alors coulés par injection au cours d'une autre opération, l'exécution des perforations et le coulage par injection des crochets étant réalisés de façon répétée pour chaque découpe respective du support à crochets à fabriquer.

11. Procédé selon la revendication 10, caractérisé en ce que des poches de réception pour du papier et/ou des feuilles sont simultanément coulées par injection sur ou à côté des crochets.
